Europäisches Patentamt

European Patent Office

Office européen des brevets

(11) Publication number: **0 068 558**
**B1**

(12) **EUROPEAN PATENT SPECIFICATION**

(45) Date of publication of patent specification: **21.08.85**

(21) Application number: **82200736.5**

(22) Date of filing: **14.06.82**

(51) Int. Cl.⁴: **B 01 J 8/12,** C 10 G 45/18,
B 01 D 29/30

(54) Moving catalyst bed reactor.

(30) Priority: **30.06.81 GB 8120176**

(43) Date of publication of application:
**05.01.83 Bulletin 83/01**

(45) Publication of the grant of the patent:
**21.08.85 Bulletin 85/34**

(84) Designated Contracting States:
**BE DE FR IT NL**

(56) References cited:
**GB-A- 963 271**
**US-A-3 826 737**
**US-A-3 883 312**
**US-A-4 040 901**

(73) Proprietor: **SHELL INTERNATIONALE
RESEARCH MAATSCHAPPIJ B.V.**
**Carel van Bylandtlaan 30**
**NL-2596 HR Den Haag (NL)**

(72) Inventor: **Schuurman, Pieter Jacobus**
**Carel van Bylandtlaan 30**
**NL-2596 HR The Hague (NL)**

(74) Representative: **Aalbers, Onno et al**
**P.O. Box 302**
**NL-2501 CH The Hague (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to a moving catalyst bed reactor for the catalytic treatment of hydrocarbons, in particular catalytic desulphurization and demetallization of petroleum residues.

More particularly, the invention relates to a moving catalyst bed reactor comprising a normally vertically extending cylindrical vessel having separate inlets for reactant and catalyst at the upper part of the vessel and catalyst bed supporting means in the shape of at least one downwardly converging conical surface the lower end thereof being connected to a vertical outlet channel having a circumferential wall for the combined passage of catalyst and separation of reactor effluent, said circumferential wall being provided with a cylindrical screen section for withdrawing reactor effluent from catalyst, and separate outlet conduits for reactor effluent and catalyst downstream of said screen section.

A moving catalyst bed reactor of a design as identified above is for example described in U.S.A. patent specification No. 3,883,312. According to this publication both the used solid catalyst and the reactor effluent are removed from a moving catalyst bed reactor through the same withdrawal conduit. The reactor effluent leaves the conduit through the openings of a circumferential screen section in its wall. The catalyst descends past the openings and is washed by an upward moving wash oil which leaves the conduit through the same openings.

In the last years there is a tendency to carry out processes of the kind concerned on an ever increasing scale, which is associated with growing problems in the constructional design of reactors when scaled up to such large capacities. One such problem is the circumstance that the diameter of the vertical outlet channel is to be increased to allow the growing mass of catalyst to pass the channel. As a consequence thereof the diameter of the circumferential screen section is to be increased, which makes the manufacture and installation of the screen section rather complicated. Further, enlarging the diameter of the cylindrical screen section will soon lead to the problem that the screen section can no longer be removed from the interior of the vessel through the normally available manholes in the reactor wall as a whole. This means that for repair or replacement of the screen section it is necessary to split up the screen section into a number of parts, or to dismantle the reactor, which are both time-consuming operations.

It is an object of the invention to overcome the above-mentioned difficulties and according to a main feature thereof, the moving catalyst bed reactor of the type specified above according to the invention is characterized in that the cylindrical screen section is vertically divided into a plurality of separate screen segments, each separate screen segment being laterally displaceable without displacement of the other screen segments.

In a suitable embodiment of the present invention the screen segments are each flat shaped. The screen segments can easily be installed in an existing reactor without the necessity of dismantling the whole reactor. Further, such screen segments, especially when they are flat shaped can be manufactured in a simple manner.

The invention further resides in measures for reducing the loads on the screen section during operation of the reactor.

Another consequence of the growing tendency to carry out catalytic treating processes on an ever increasing scale is the fact that the screen sections in the outlet channels of reactors must withstand ever increasing loads both in horizontal and in vertical direction. In the known moving catalyst bed reactors of the kind concerned in the screen sections in the vertical channels form an integral part of the vertical channels, and must therefore be designed to withstand the load of the catalyst. This means that in the known moving catalyst bed reactors the size and number of the openings in the screen sections are to be reduced or extra reinforcing means are to be applied to obtain the required resistance of the screen sections against increasing loads. However, reducing the size and/or number of screen openings has an adverse influence on the separating efficiency of the screen sections.

For absorbing the horizontal load on the screen section in a vertical outlet channel of a moving catalyst bed reactor of the type concerned, according to the invention, the screen segments are preferably supported in lateral outward direction by supporting elements. For absorbing the vertical load on the screen segments the supporting elements preferably form part of a support structure secured to the downwardly converging conical surface arranged above the outlet channel, said support structure being further secured to at least the part of the outlet channel arranged below the screen segments. By this arrangement of a support structure not only the screen segments but also the part of the vertical outlet channel above the screen segments are relieved. As an alternative, the support structure may be secured to the outlet channel at a level above and a level below the screen segments. By this arrangement the vertical load on the lower part of the outlet channel below the screen segments is transmitted via the support structure to the part of the outlet channel above the screen segments. This last arrangement is suitable at moderate vertical loads, whereas the first mentioned arrangement is particularly suitable at high vertical loads.

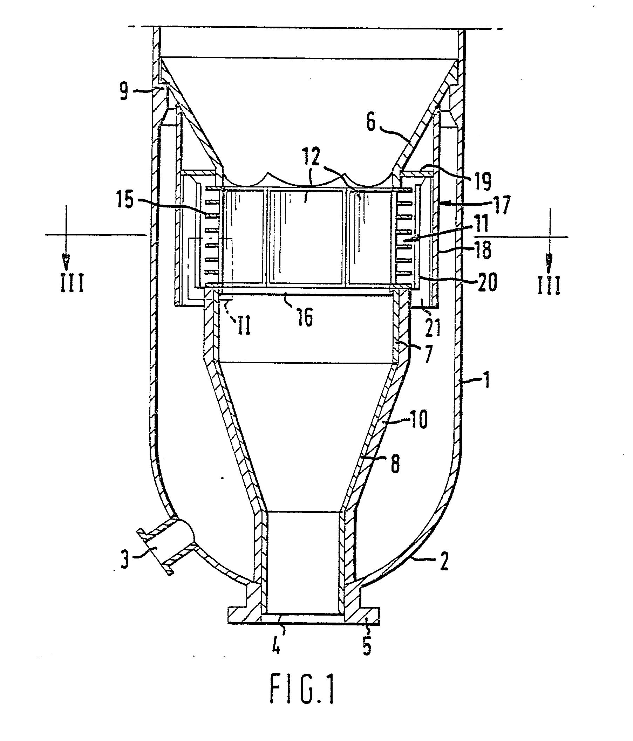

The invention will now be described by way of example in more detail with reference to the accompanying drawings, in which Figure 1 schematically shows a longitudinal cross section of a part of a reactor according to the invention;

Figure 2 shows detail II of Figure 1 on a larger scale;

Figure 3 schematically shows cross section III—III of Figure 1;

Figure 4 schematically shows a longitudinal cross section of an alternative embodiment according to the invention and

Figure 5 schematically shows cross section V—V of Figure 4. It is noted that similar parts of the embodiments shown in the figures have been identified by the same reference numerals.

Figure 1 shows the bottom part of a normally vertically extending cylindrical reactor vessel according to the invention comprising the lower part of the reactor side wall 1 and the bottom reactor head 2. The bottom reactor head 2 is provided with a reactor effluent outlet nozzle 3, and a catalyst withdrawal pipe 4 including a catalyst unloading nozzle 5. The reactor is internally provided with supporting means for supporting the catalyst, said supporting means consisting of a downwardly converging conical surface 6 terminating at the lower end thereof in a vertical outlet channel 7 for the passage of catalyst and reactor effluent. In this example the angle with the vertical axis of the conical surface 6 is about 20°.

To direct catalyst from the channel 7 towards the catalyst withdrawal pipe 4, a lower cone segment 8 is arranged between the lower end of the outlet channel 7 and the upper end of the catalyst withdrawal pipe 4. The angle with the vertical axis of the lower cone segment 8 should be such that the catalyst can smoothly pass this segment 8 towards the catalyst withdrawal pipe 4.

The conical surface 6, the outlet channel 7 and the lower cone segment 8 are supported by cone supports 9 at the inner surface of the reactor wall 1. The walls of the outlet channel 7, the lower cone segment 8 and the catalyst withdrawal pipe 4 are provided with an insulating layer 10. The outlet channel 7 is provided with a cylindrical screen section 11, for separating reactor effluent passing through the screen section, from catalyst in the outlet channel 7, said screen section 11 being arranged in an opening of the wall of the outlet channel 7.

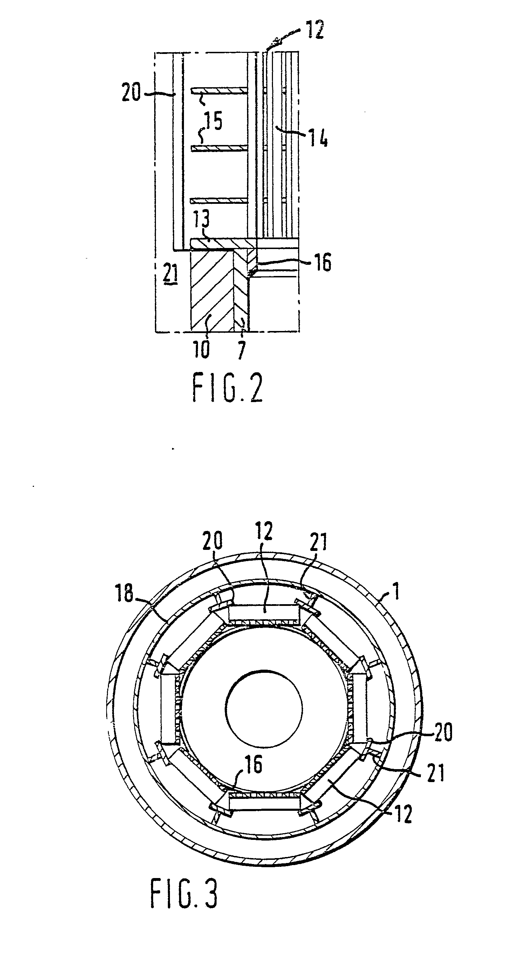

As more clearly shown in Figure 3, the screen section 11 comprises a plurality of separate, flat shaped screen segments 12. The number of screen segments 12 depends on the diameter of the outlet channel 7 as well as on the diameter of a not shown opening in the reactor wall, for example a manhole, for introducing the screen segments 12 into the reactor. To form the cylindrical screen section 11 at least three flat shaped screen segments should be applied. As shown in Figure 2 each screen segment 12 consists of a framework 13 provided with vertical bars 14 and horizontal reinforcing bars 15. The width of the slot opening between adjacent vertical bars 14 is so chosen that catalyst cannot pass through said screen segments 12. For installation purposes the height of the opening in the wall of the vertical outlet channel 7 is chosen slightly larger than the height of said screen segments 12. Once installed in the outlet channel 7 the screen segments 12 are locked in place by arranging a locking strip 16 at the lower end of the opening in the wall of the outlet channel 7. The locking strip 16 is for example welded to the wall of the outlet channel 7. Although not necessary the screen segments 12 may be spot welded to the wall of the outlet channel 7 and the locking strip 16, extending above the lower end of the opening in the wall of outlet channel 7.

The screen section 11 is encompassed by a support structure generally indicated by reference numeral 17. Said support structure 17 comprises a stiffening cylinder 18 secured at the upper end thereof to the conical surface 6 by means of welding. A stiffening ring 19 is arranged between the stiffening cylinder 18 and the outlet channel 7. The screen segments 12 are supported in lateral outward direction by a number of supporting elements formed by vertical brackets 20 forming part of the support structure 17. The number of brackets 20 equals the number of screen segments 12. The brackets 20 are so arranged with respect to the screen segments 12 that each bracket 20 supports two adjacent screen segments 12 at their vertical edges. Between each bracket 20 and the stiffening cylinder 18 a bracket 21 is arranged. Said brackets 21 are secured to the stiffening ring 19 and the lower part of the outlet channel 7 by means of welding.

During operation of the reactor, partly shown in Figure 1, catalyst and reactant are supplied into the upper part of the interior of the reactor. Having past the conical surface 6 the catalyst and reactor effluent enter the outlet channel 7 where the reactor effluent is separated from the catalyst via the screen section 11. The reactor effluent and catalyst thereby exert lateral forces on the screen segments 12. These lateral forces are taken up by the stiffening cylinder 18 via the brackets 20 and 21. The catalyst moves downwardly through the outlet channel 7 and via the interior of the lower cone segment 8 into the catalyst withdrawal pipe 4. The axial downward forces exerted by the catalyst and the lower cone segment 8 on the outlet channel 7 are transmitted via the brackets 21 and the stiffening cylinder 18 to the conical surface 6. By this arrangement the screen segments 12 are not subjected to high axial loads. As a consequence thereof the size and number of openings in the screen segments can be so chosen that an optimal reactor effluent removal is possible. In view of the above the screen segments 12 can further be made relatively light which has a positive influence on the cost price of said screen segments 12. Finally, since the screen segments 12 do not form part of the support for the lower cone segment 8, all the screen segments 12 can simultaneously be removed from the outlet channel 7 without the necessity of temporarily supporting the lower cone segment 8 by special means.

For absorbing the differences in expansion between the internal construction of the reactor and the wall of the reactor the catalyst withdrawal pipe 4 is slidably arranged in the catalyst unloading nozzle 5.

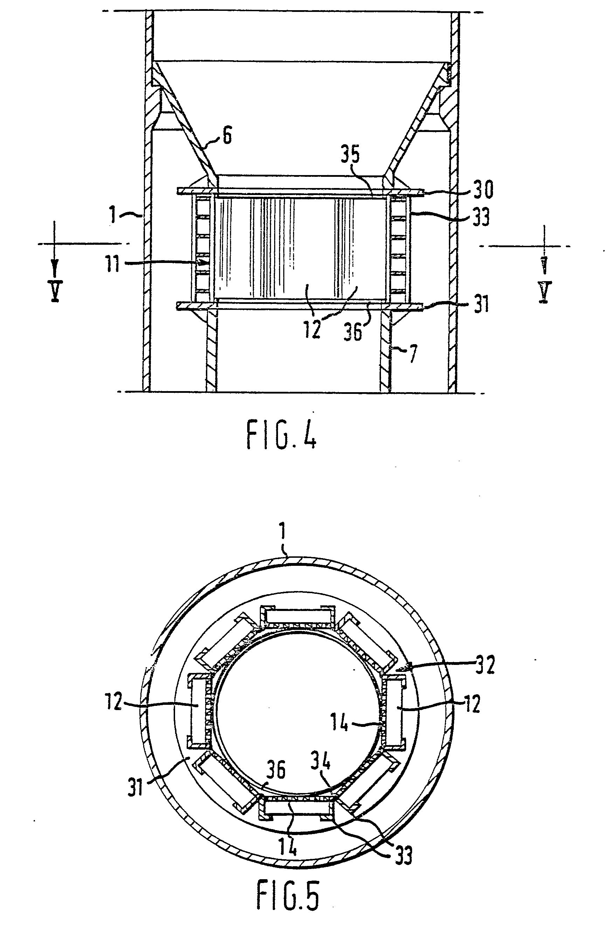

Reference is now made to Figures 4 and 5 showing a second embodiment of the invention. Similar parts as described in connection with Figures 1, 2 and 3 have been identified by the same reference numerals. The outlet channel 7 of the reactor partly shown in Figure 4 is provided with annular collars 30 and 31. Said collars are interconnected by means of a plurality of support elements consisting of wedge-like structures 32, thereby forming a support structure for the screen section 11 and the part of the outlet channel 7 arranged below the screen section 11. The number of wedge-like structures 32 is chosen equal to the number of screen segments 12.

As shown in Figure 5 each wedge-like structure 32 comprises two angle sections 33, being interconnected by means of a weld 34. The distance between each pair of adjacent wedge-like structures 32 is so chosen that a screen segment 12 fits between a pair of adjacent structures 32. Displacement of the screen segments 12 in lateral outward direction is prevented by the tangential sides of the angle sections 33. Although not necessary, the screen segments 12 may be spot-welded to the collars 30 and 31 after installation. The screen segments 12 are locked in position by two locking strips 35 and 36 arranged at the inner parts of the collars 30 and 31, respectively. The locking strips 35 and 36 are secured to the collars 30 and 31, respectively, by means of welding. For maintenance and/or repair of the screen segments 12 the locking strips 35 and 36 are first removed from the collars 30 and 31 respectively, whereafter the screen segments 12 can be easily displaced.

Vertical forces on the lower part of the outlet channel 7 are transmitted via the wedge-like structures 32 to the upper part of the outlet channel 7. An advantage thereof resides herein that for removal of the screen segments 12 the lower part of the outlet channel 7 does not need to be temporarily supported by special means. Further the above support structure enables a relatively light and therefore cheap construction of the screen segments.

Although the embodiments shown in the Figures comprise support structures for the screen segments, the present invention is not restricted to the application of such support structures. In case the loads on the internals of the reactor are rather moderate, the screen segments themselves may form part of the support structure supporting the part of the outlet channel 7 arranged below the screen section 11. This may be obtained by firmly securing the screen segments 12 to the parts of the wall of the outlet channel 7 arranged above and below the screen section 11.

In addition to the screen section 11 the outlet channel 7 may be further provided with wall portions within said channel each bearing a screen section for withdrawal of reactor effluent from the catalyst, as described in EP—A—45108. If such wall portions are formed by the inner wall of a ring-shaped outlet, as shown in Figures 1 and 2 of said patent application, said wall portions may be formed and supported in the same manner as hereinabove described with reference to the screen section 11.

The invention is not restricted to flat shaped screen segments 12. Instead thereof, also curved or bent screen segments may be applied.

Finally it is observed that also combinations of the design features of the embodiment shown in the figures may be used, for example the wedge-like structures 32 in the embodiment shown in Figures 4 and 5 may be used in the embodiment shown in Figures 1, 2 and 3 instead of the supporting brackets 20.

## Claims

1. Moving catalyst bed reactor comprising a normally vertically extending cylindrical vessel having separate inlets for reactant and catalyst at the upper part of the vessel and catalyst bed supporting means in the shape of at least one downwardly converging conical surface the lower end thereof being connected to a vertical outlet channel having a circumferential wall for the combined passage of catalyst and separation of reactor effluent, said circumferential wall being provided with a cylindrical screen section for withdrawing reactor effluent from catalyst, and separate outlet conduits for reactor effluent and catalyst downstream of said screen section, characterized in that the cylindrical screen section is vertically divided into a plurality of separate screen segments, each separate screen segment being laterally displaceable without displacement of the other screen segments.

2. Moving catalyst bed reactor as claimed in claim 1, wherein the screen segments are each flat shaped.

3. Moving catalyst bed reactor as claimed in claim 1 or 2, wherein the screen segments are supported in lateral outward direction by supporting elements.

4. Moving catalyst bed reactor as claimed in claim 3, wherein the supporting elements form part of a support structure secured to the downwardly converging conical surface and at least that part of the vertical outlet channel arranged below the screen segments.

5. Moving catalyst bed reactor as claimed in claim 4, wherein the support structure comprises a cylindrical wall encompassing the screen section and having the upper end thereof secured to the downwardly converging conical surface.

6. Moving catalyst bed reactor as claimed in claim 3, wherein the supporting elements form part of a support structure secured to the vertical outlet channel at a level above and at a level below the screen segments.

7. Moving catalyst bed reactor as claimed in any one of the claims 3—6, wherein the supporting elements are formed by wedge-like structures, comprising angle sections, the wedge-like structures being so arranged that each screen segment is supported in lateral outward direction by angle sections of two adjacent wedge-like structures.

8. Moving catalyst bed reactor as claimed in any one of the claims 3—6, wherein the supporting elements are formed by vertical brackets, supporting the screen segments at the vertical edges.

9. Moving catalyst bed reactor as claimed in any one of the claims 6—8, wherein the support structure further comprises two annular collars secured to the vertical outlet channel and being interconnected by the supporting elements.

10. Moving catalyst bed reactor as claimed in any one of the claims 1—9, further comprising a cylindrical locking strip for locking the screen segments in vertical direction said locking strip being secured to the vertical outlet channel.

## Revendications

1. Un réacteur à lit mobile de catalyseur comprenant un récipient cylindrique s'étendant normalement verticalement ayant des entrées séparées pour corps en réaction et pour catalyseur à la partie supérieur du récipient et des moyens de support du lit de catalyseur sous la forme d'au moins une surface conique convergeant vers le bas dont l'extrémité inférieure est reliée à un canal de sortie vertical ayant une paroi circonférentielle pour à la fois le passage du catalyseur et la séparation de l'effluent du réacteur, cette paroi circonférentielle étant pourvue d'une portion cylindrique à tamis pour séparer l'effluent du réacteur du catalyseur, et des conduits de sortie séparés pour l'effluent du réacteur et le catalyseur en aval de la portion à tamis, caractérisé en ce que la portion cylindrique à tamis est divisée verticalement en une pluralité de segments à tamis séparés, chaque segment à tamis séparé étant déplaçable latéralement sans déplacement des autres segments à tamis.

2. Un réacteur à lit mobile de catalyseur selon la revendication 1, dans lequel les segments à tamis sont chacun d'une forme plane.

3. Un réacteur à lit mobile de catalyseur selon la revendication 1 ou 2, dans lequel les segments à tamis sont supportés en direction latérale vers l'extérieur par des éléments de support.

4. Un réacteur à lit mobile de catalyseur selon la revendication 3, dans lequel les éléments de support font partie d'une structure de support fixée à la surface conique convergeant vers le bas et à au moins la partie du canal vertical de sortie disposée au-dessous des segments à tamis.

5. Un réacteur à lit mobile de catalyseur selon la revendication 4, dans lequel la structure de support comprend une paroi cylindrique entourant la portion à tamis et ayant son extrémité supérieure fixée à la surface conique convergeant vers le bas.

6. Un réacteur à lit mobile de catalyseur selon la revendication 3, dans lequel les éléments de support font partie d'une structure de support fixée au canal vertical de sortie à un niveau au-dessus et à un niveau au-dessous des segments à tamis.

7. Un réacteur à lit mobile de catalyseur selon l'une quelconque des revendications 3—6, dans lequel les éléments de support sont formés par des structures en forme de coins, comprenant des cornières, les structures en forme de coins étant disposées de façon que chaque segment à tamis soit supporté en direction latérale vers l'extérieur par des cornières de deux structures en forme de coins adjacentes.

8. Un réacteur à lit mobile de catalyseur selon l'une quelconque des revendications 3—6, dans lequel les éléments de support sont formés par des consoles verticales, supportant les segments à tamis aux bords verticaux.

9. Un réacteur à lit mobile de catalyseur selon l'une quelconque des revendications 6—8, dans lequel la structure de support comprend en outre deux colliers annulaires fixés au canal vertical de sortie et reliés entre eux par les éléments de support.

10. Un réacteur à lit mobile de catalyseur selon l'une quelconque des revendications 1—9, comprenant en outre une bande cylindrique de verrouillage pour verrouiller les segments à tamis en direction verticale, cette bande de verrouillage étant fixée au canal vertical de sortie.

## Patentansprüche

1. Reaktor mit sich bewegendem Katalysatorbett, mit einem sich gewöhnlich senkrecht erstreckenden zylindrischen Behälter, der getrennte Einlässe für den Reaktionsteilnehmer und den Katalysator am oberen Teil des Behälters und eine das Katalysatorbett abstützende Einrichtung aufweist in Gestalt wenigstens einer nach unten konvergierenden konischen Fläche, deren unteres Ende mit einem senkrechten Auslaßkanal, der eine Umfangswand hat, verbunden ist für den kombinierten Durchgang des Katalysators und Trennung des Reaktorausflusses, wobei die Umfangswand mit einem zylindrischen Gitter- bzw. Siebabschnitt zum Abziehen des Reaktorausflusses von dem Katalysator versehen ist, und wobei getrennte Auslaßleitungen für den Reaktorausfluß und den Katalysator stromabwärts des Gitter- bzw. Siebabschnittes vorgesehen sind, dadurch gekennzeichnet, daß der zylindrische Siebabschnitt senkrecht in eine Mehrzahl von getrennten Siebsegmenten unterteilt ist, deren jedes seitlich verschiebbar ist ohne Verschiebung der anderen Siebsegmente.

2. Reaktor mit sich bewegendem Katalysatorbett nach Anspruch 1, in welchem die Siebsegmente flache bzw. ebene Gestalt haben.

3. Reaktor mit sich bewegenden Katalysatorbett nach Anspruch 1 oder 2, in welchem die Siebsegmente durch Abstützelemente in seitlicher Auswärtsrichtung abgestützt sind.

4. Reaktor mit sich bewegendem Katalysatorbett nach Anspruch 3, in welchem die Abstützelemente einen Teil eines Abstützgebildes darstellen, welches an der nach unten konvergierenden konischen Fläche und an wenigstens demjenigen Teil des senkrechten Auslaßkanales befestigt ist, der unter den Siebsegmenten angeordnet ist.

5. Reaktor mit sich bewegendem Katalysatorbett nach Anspruch 4, in welchem das Abstützgebilde eine zylindrische Wand aufweist, die den Siebabschnitt umgibt und deren oberes Ende an der nach unten konvergierenden konischen Fläche befestigt ist.

6. Reaktor mit sich bewegendem Katalysatorbett nach Anspruch 3, in welchem die Abstützelemente einen Teil eines Abstützgebildes darstellen, welches an dem senkrechten Auslaßkanal auf einer Höhe oberhalb und auf einer Höhe unterhalb der Siebsegmente befestigt ist.

7. Reaktor mit sich bewegendem Katalysatorbett nach einem der Ansprüche 3 bis 6, in welchem die Abstützelemente durch keilartige Gebilde dargestellt sind, die Winkelabschnitte aufweisen und die so angeordnet sind, daß jedes Siebsegment in seitlicher Auswärtsrichtung durch Winkelabschnitte zweier benachbarter keilartiger Gebilde abgestützt ist.

8. Reaktor mit sich bewegendem Katalysatorbett nach einem der Ansprüche 3 bis 6, in welchem die Abstützelemente durch senkrechte Lagerarme gebildet sind, welche die Siebsegmente an den senkrechten Kanten abstützen.

9. Reaktor mit sich bewegendem Katalysatorbett nach einem der Ansprüche 6 bis 8, in welchem das Abstützgebilde weiterhin zwei ringförmige Kragen oder Bünde aufweist, die an dem senkrechten Auslaßkanal befestigt und durch die Abstützelemente verbunden sind.

10. Reaktor mit sich bewegendem Katalysatorbett nach einem der Ansprüche 1 bis 9, weiter aufweisend einen zylindrischen Sicherungsstreifen zum Sichern der Siebsegmente in senkrechter Richtung, wobei der Sicherungsstreifen an dem senkrechten Auslaßkanal befestigt ist.

FIG.1

FIG.2

FIG.3

FIG.4

FIG.5

3